# EUROPÄISCHE PATENTANMELDUNG

(11) **EP 2 256 714 A1**
(43) Veröffentlichungstag der Anmeldung: **01.12.2010**
(21) Anmeldenummer: 10002512.1
(22) Anmeldetag: 10.03.2010
(51) Int. Cl.: G09F 3/04, G09F 3/12, A01G 23/099

(54) **Holzsignierelement, insbesondere Holzsignierplättchen, zum Kennzeichen von Stammholz oder anderem Holz**

(30) Priorität: 29.05.2009 DE 102009023273
(71) Anmelder: Latschbacher GmbH, 4484 Kronstorf (AT)
(72) Erfinder: Latschbacher, Klaus, A-4484 Kronstorf (AT)
(74) Vertreter: Vetter, Hans

(57) **Zusammenfassung**

Es wird ein insbesondere als Holzsignierplättchen ausgebildetes Holzsignierelement zum Kennzeichnen von Stammholz oder anderem Holz vorgeschlagen, das mit in das zu kennzeichnende Holz eindrückbaren oder einschlagbaren Befestigungsmitteln (2) versehen ist und das wenigstens aus einem Kunststoffmaterial besteht, das bei im Rahmen der Papier- oder Faserplattenherstellung stattfindender chemischer Behandlung des mit ihm gekennzeichneten Holzes chemisch abgebaut und im Wesentlichen aufgelöst wird, **dadurch gekennzeichnet, dass** das Kunststoffmaterial lignozellulosehaltiges Material enthält.

## Beschreibung

Die Erfindung betrifft ein Holzsignierelement, insbesondere ein Holzsignierplättchen, zum Kennzeichnen von Stammholz oder anderem Holz, das mit in das zu kennzeichnende Holz eindrückbaren oder einschlagbaren Befestigungsmitteln versehen ist und das wenigstens aus einem Kunststoffmaterial besteht, das bei im Rahmen der Papier- oder Faserplattenherstellung stattfindender chemischer Behandlung des mit ihm gekennzeichneten Holzes chemisch abgebaut und im Wesentlichen aufgelöst wird.

Derartige Holzsignierelemente sind beispielsweise aus der DE 3837175 C2 bekannt und bestehen beispielsweise aus einem Polyacetale-Kunststoff. Dieses Material sowie auch verschiedene andere Kunststoffmaterialien lösen sich bei der im Rahmen der Papierherstellung stattfindenden chemischen Behandlung ganz oder zumindest zum großen Teil auf, so dass das Entfernen der Signierelemente vom Holz vor der Behandlung oder das Herausholen der Signierelemente während oder nach der Behandlung aus der das Holz chemisch abbauenden Säure oder Lauge nicht mehr erforderlich ist. Eventuell verbleibende kleine Restbestände von Kunststoffteilchen sind zwar für die Papierherstellung und die Papierqualität problemlos, jedoch sind solche Probleme in der Plattenindustrie, beispielsweise bei der Herstellung von MDF-Faserplatten (mitteldichte Faserplatten) aufgetreten. Dies liegt zum einen daran, dass bei der Verarbeitung von Holz für die Plattenindustrie weniger aggressive Laugen oder sonstige chemische Bäder verwendet werden, so dass gröbere Kunststoffpartikel in diesen Bädern verbleiben können, und zum anderen daran, dass sich diese verbleibenden Kunststoffpartikel beim Herstellen solcher Faserplatten mit den bei diesem Prozess eingesetzten Leimen nicht verkleben lassen. Beim Schleifen solcher Platten brechen daher die an der Oberfläche befindlichen Kunststoff-Restbestandteile solcher Markierungsplättchen aus und hinterlassen Vertiefungen in der Platte, die sich nach dem Kaschieren der Platte mit einer Dekorfolie in optisch unschöner Weise abzeichnen.

Eine Aufgabe der vorliegenden Erfindung besteht darin, einen Werkstoff für solche Holzsignierelemente zu schaffen, die sowohl für Hölzer für die Papierindustrie als auch für die Plattenindustrie verwendet werden können.

Diese Aufgabe wird erfindungsgemäß durch ein Holzsignierelement mit den Merkmalen des Anspruchs 1 gelöst.

Durch das erfindungsgemäße Eincompoundieren von lignozellulosehaltigen Materialien in das Kunststoffmaterial der Signierelemente wird erreicht, dass aus verbleibenden Kunststoff-Restpartikeln Zellulosefasern herausragen. Diese hydrophilen Zellulosefasern können vom wasserbasierenden Leim benetzt werden, der beim Herstellen der Faserplatten verwendet wird. Dadurch ist eine einwandfreie Verklebung eventueller Restpartikel der Signierelemente auch an der Plattenoberfläche möglich, und beim Schleifen dieser Platten brechen daher die an der Oberfläche befindlichen Presspartikel der Signierelemente nicht mehr aus der Platte heraus, so dass glatte Oberflächen erreicht werden. Da sich an der polymeren Struktur des Signierelement-Werkstoffes nichts verändert hat und außerdem der Polymeranteil durch den Zusatz der lignozellulosehaltigen Materialien verringert worden ist, wird die bereits bei reinen Kunststoffmaterialien, die sich bei der im Rahmen der Papierherstellung stattfindenden chemischen Behandlung des mit ihm gekennzeichneten Holzes chemisch abbauen, erreichte "Papiererzeugungstauglichkeit" sogar noch verbessert.

Durch die in den Unteransprüchen aufgeführten Maßnahmen sind vorteilhafte Weiterbildungen und Verbesserungen des im Anspruch 1 angegebenen Holzsignierelements möglich.

Als lignozellulosehaltige Materialen und Kunststoffmaterial eignen sich insbesondere Holzmehl und/oder Holzfasern, vorzugsweise von Laub- oder Nadelholz, mit einer bevorzugten mittleren Faserlänge von 0,5 bis 5 mm. Als Masseanteil der lignozellulosehaltigen Materialien hat sich ein Wert von 2 bis 40 % als optimal erwiesen.

In vorteilhafter Weise können zusätzlich im Kunststoffmaterial noch anorganische Füll- und/oder Verstärkungsstoffe, wie Talkum, Kreide, Glasfaser und dergleichen, enthalten sein. Der Masseanteil dieser anorganischen Füll- und/oder Verstärkungsstoffe beträgt vorzugsweise 1 bis 20 %. Hierdurch wird der Kunststoffanteil der Signierelemente weiter reduziert, ohne dass sich dadurch die mechanischen Eigenschaften in unerwünschter Weise verschlechtern würden.

Als Kunststoffmaterialien eignen sich insbesondere hydrolisierbare Polymere, wie Polyacetale oder Polyester, vorzugsweise POM (Polyoxymethylen), PET (Polyethylenterephthalat) oder PBT (Polybutylenterephthalat).

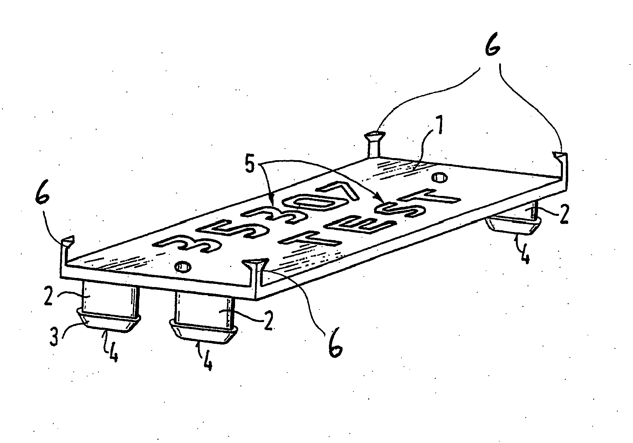

Ein Ausführungsbeispiel eines Holzsignierelements ist in der Zeichnung dargestellt und in der nachfolgenden Beschreibung näher erläutert. Die einzige Figur zeigt eine perspektivische Ansicht eines solchen Holzsignierelements.

Das in der einzigen Figur dargestellte Holzsignierelement verfügt über einen plättchenförmigen Signierkörper 1 mit rechteckigem Grundriss. An einer Flachseite sind vier im Wesentlichen leistenförmige Einschlagvorsprünge 2 einstückig angeformt und besitzen jeweils einen zahn- beziehungsweise widerhakenförmigen Fortsatz 3 an ihrem freien Endbereich. Um Holz, beispielsweise Stammholz, zu kennzeichnen, wird das Holzsignierelement mit Hilfe von vier Haltevorsprüngen 6 an einen nicht dargestellten Einschlaghammer angeklemmt und in das zu kennzeichnende Holz so eingeschlagen, dass die Einschlagvorsprünge 2 mit Hilfe ihrer scharfen Kanten 4 in das Holz eindringen. Dies ist beispielsweise in der EP 1286325 B1 näher dargestellt und beschrieben.

Um die an den vier Ecken des Signierkörpers 1 in die relativ zu den Einschlagvorsprüngen 2 entgegengesetzte Richtung weisenden Haltevorsprünge 6 elastischer beweglich zu machen, können die vier Eckbereiche des Signierkörpers 1 mit nicht dargestellten schlitzförmigen Einformungen versehen sein, wie dies ebenfalls in der EP 1286325 B1 dargestellt und näher beschrieben ist.

An der den Einschlagvorsprüngen 2 entgegengesetzten Oberseite des Signierkörpers 1, an dem sich auch die Haltevorsprünge 6 befinden, ist eine Signatur 5 angebracht. Hierbei kann es sich gemäß der Darstellung um eine Buchstaben- und/oder Zahlenkombination handeln, um eine Strichcode-Signatur, um eine magnetische Signatur oder eine elektronische Signatur.

Das abgebildete Holzsignierelement besteht aus einem Kunststoffmaterial, das sich bei der im Rahmen der Papierherstellung und Faserplattenherstellung stattfindenden chemischen Behandlung des mit ihm gekennzeichneten Holzes chemisch abbaut und im Wesentlichen aufgelöst wird. Derartige Kunststoffe sind beispielsweise hydrolisierbare Polymere, wie Polyacetale oder Polyester, zum Beispiel POM (Polyoxymethylen), PET (Polyethylenterephthalat) oder PBT (Polybutylenterephthalat).

In dieses Kunststoffmaterial werden lignozellulosehaltige Materialen eincompoundiert, also zum Beispiel Holzmehl oder Holzfasern, insbesondere von Laubholz- oder Nadelholz, wobei Einjahrespflanzen am geeignetsten sind. Der Masseanteil dieser lignozellulosehaltigen Materialien beträgt bevorzugt 2 bis 40 %. Eine mittlere Faserlänge von 0,5 bis 5 mm im Falle von Holzfasern hat sich als besonders geeignet erwiesen. Zusätzlich kann ein Masseanteil an anorganischen Füll- und Verstärkungsstoffen, wie Talkum, Kreide, Glasfaser und dergleichen, zugefügt beziehungsweise zugemischt werden. Dies ist jedoch nicht zwingend.

Die chemische Behandlung im Rahmen der Papierherstellung oder Faserplattenherstellung erfolgt in bekannter Weise in Säure- oder Laugebädern, zum Beispiel sulfithaltige Laugen, wie Calciumhydrogensulfit-Laugen oder Magnesium-Bisulfit-Laugen. Bei dieser chemischen Behandlung werden die Holzsignierelemente chemisch abgebaut und lösen sich im Wesentlichen auf. Eventuell noch vorhandene Restpartikel der Holzsignierelemente können sich bei der Faserplattenherstellung an den Plattenoberflächen anordnen. Da die aus den Kunststoffpartikeln herausragenden hydrophilen Zellulosefasern von wasserbasierenden Leimen benetzt werden können, werden diese Partikel mit der Platte sicher verklebt und verbleiben auch beim Schleifen der Platten an Ort und Stelle, so dass glatte Oberflächen erzielbar sind. Solche bei der Plattenherstellung, insbesondere von MDF-Platten (mitteldichte Faserplatten) verwendete wasserbasierende Leime sind beispielsweise wässrige Harnstoff- oder Melamin-Formaldehyd-Leime.

## Patentansprüche

1. Holzsignierelement, insbesondere Holzsignierplättchen, zum Kennzeichnen von Stammholz oder anderem Holz, das mit in das zu kennzeichnende Holz eindrückbaren oder einschlagbaren Befestigungsmitteln (2) versehen ist und das wenigstens aus einem Kunststoffmaterial besteht, das bei im Rahmen der Papier- oder Faserplattenherstellung stattfindender chemischer Behandlung des mit ihm **gekennzeichnet**en Holzes chemisch abgebaut und im Wesentlichen aufgelöst wird, **dadurch gekennzeichnet, dass** das Kunststoffmaterial lignozellulosehaltiges Material enthält.

2. Holzsignierelement nach Anspruch 1, **dadurch gekennzeichnet, dass** als lignozellulosehaltiges Material Holzmehl und/oder Holzfasern enthalten sind.

3. Holzsignierelement nach Anspruch 2, **dadurch gekennzeichnet, dass** die Holzfasern eine mittlere Faserlänge von 0,5 bis 5 mm ausweisen.

4. Holzsignierelement nach einem der vorhergehenden Ansprüche, **dadurch gekennzeichnet, dass** der Masseanteil des lignozellulosehaltigen Materials 2 bis 40 % beträgt.

5. Holzsignierelement nach einem der vorhergehenden Ansprüche, **dadurch gekennzeichnet, dass** das Kunststoffmaterial zusätzlich anorganische Füll- und/oder Verstärkungsstoffe enthält, insbesondere in Form von körnigen oder pulvrigen Materialien.

6. Holzsignierelement nach Anspruch 5, **dadurch gekennzeichnet, dass** als Füll- und/oder Verstärkungsstoffe Talkum und/oder Kreide und/oder Glasfaser enthalten ist.

7. Holzsignierelement nach Anspruch 5 oder 6, **dadurch gekennzeichnet, dass** der Masseanteil der anorganischen Füll- und/oder Verstärkungsstoffe 1 bis 20 % beträgt.

8. Holzsignierelement nach einem der vorhergehenden Ansprüche, **dadurch gekennzeichnet, dass** das Kunststoffmaterial ein hydrolisierbares Polymer, wie Polyacetal und/oder Polyester, ist, insbesondere POM , PET und/oder PBT.
